# EUROPEAN PATENT APPLICATION

(11) **EP 0 542 568 A2**
(43) Date of publication of application: **19.05.1993**
(21) Application number: 92310390.7
(22) Date of filing: 13.11.1992
(51) Int. Cl.: B60T 17/08

(54) **Spring force actuator**

(30) Priority: 15.11.1991 GB 9124349
(71) Applicant: BENDIX LIMITED, Kingswood, Bristol BS15 2NL (GB)
(72) Inventor: Bowden, Paul Anthony, Warmley, Bristol BS15 5QX (GB); Fisher, Paul Anthony, Hanham, Bristol BS15 3JW (GB); McCouch, John, Frenchay, Bristol BS16 1HA (GB)
(74) Representative: Turner, Alan Reginald

(57) **Abstract**

A spring brake actuator has a force output rod (4) extending from a fluid pressure responsive member sealingly and movably through an internal seal (66) carried by a seal assembly (40) provided in a wall (2) of the actuator housing, the actuator assembly having an inset (61) in an aperture (41) of the housing the aperture being formed with an unmachined frusto-conical inner surface and providing location and sealing relative to the outer surface of the inset.

## Description

This invention relates to spring force actuators, and relates especially but not exclusively to spring brake actuators.

Spring brake actuators are typically employed as secondary and/or parking brake actuators in compressed air operable brake systems of heavy road vehicles. A typical such actuator comprises a cylindrical housing defining an internal bore and a fluid pressure responsive member (typically a piston) sealingly movable in the bore. A heavy spring is retained under compression between one side of the pressure responsive member and one end of the cylinder. Application of fluid pressure to the other side of the pressure responsive member maintains the spring under full compression and holds an output rod member in a fully withdrawn position. In such position no force is applied to the brake by the spring. A brake application is then effected by partial or full venting of the fluid pressure. In order to effect release of the brake without applying fluid pressure it is usual to provide a screw-threaded member which is accessible from the outside the housing operable to draw the pressure responsive member towards its full release position in the cylinder. In order to accommodate such a screw-threaded member in the fully retracted position it is usual that the output rod is tubular in section. Moreover such a tubular member normally extends outwardly through a seal retained in an axial machined aperture of the cylinder housing.

The present invention has as an object to reduce the machining necessary in manufacture of such an actuator.

According to the present invention there is provided a spring force actuator comprising a housing within which a pressure responsive member is axially movable under the influence of fluid pressure acting thereon in opposition to the force of a spring, to determine an output force applied via an output rod which passes sealingly movably through an aperture in a wall of the housing characterised in that said output rod passes through a seal assembly comprising an insert having axial positioning means, said insert locating a first annular seal between itself and a generally frusto-conical part of said aperture and a second annular seal between itself and the output rod.

In order that the invention may be further understood and readily carried into effect the same will be described with reference to the accompanying drawings of which
Fig. 1 illustrates an example of a spring brake actuator utilising the invention
Fig. 2 illustrates a broken down view of a sealing assembly included in the actuator of Fig. 1 and
Figs. 3 and 4 illustrate further alternative sealing assemblies.

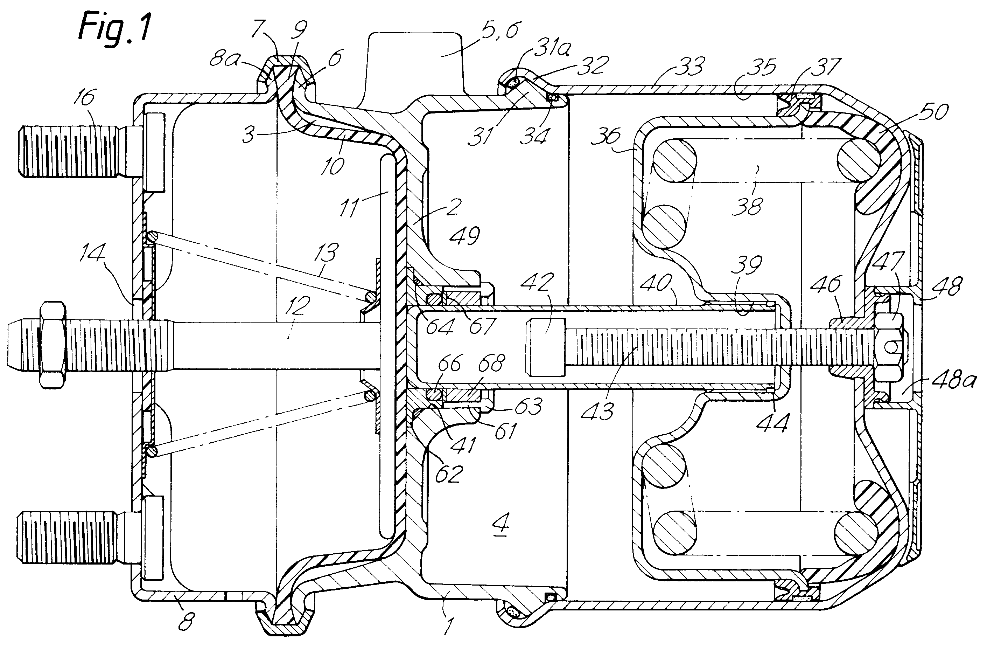

Referring to Fig. 1 of the drawings the combined compressed air operable service brake actuator and spring brake actuator comprises a middle body casting denoted by reference 1. Such casting is formed by pressure die casting and provides a dividing wall 2 between a pressure chamber 3 of the service brake portion and a pressure chamber 4 of the spring brake portion. These chambers communicate via respective passages (not shown) with twin input ports denoted at 5, 6 formed on the outside of the casting.

On the left hand end of the casting 1, as seen in the drawing, there is formed a peripheral lip portion 6 to receive a pressed steel clamp ring 7 to clamp the peripheral bead 9 of a dish-shaped diaphragm 10 between lip 6 and a corresponding lip 8a of a non-pressure portion 8 of the service actuator portion. Diaphragm 10 acts against a push-plate 11 carrying the screw-threaded actuator output rod. The push-plate is urged towards the normal rest condition as shown by means of a light conical return spring 13 captive between the push-plate and the non-pressure portion of the actuator body, the actuator rod extending outwardly through a central aperture 14 thereof for connection to a brake mechanism of a vehicle. The wider end of the conical spring 14 is located by means of an annular locating plate positioned within the non-pressure portion between the heads of mounting studs 16 which are welded in position to project through respective apertures for mounting the actuator in known manner.

On the right hand end of the middle casting 1 as seen in the drawing there is a peripheral lip portion 31 to retain a rolled-over end 32 of a pressed steel cylinder 33 of the spring brake actuator portion. The rolled end 32 and lip 31 trap a retaining ring 31a in known manner and seal 34 is provided between the casting 1 and the cylinder 33. Axially sealingly slideable in the bore 35 of cylinder 33 there is provided a piston 36 with an annular seal and piston guide assembly 37. A power spring 38 is trapped under compression between the piston 36 and a spring support member the right hand end of the cylinder 33, this spring 38 being shown in its fully compressed condition as it is in use with full pressure applied to the chamber 4. The piston 36 is formed with a central recess which accommodates seal 44 and a screwed-in spring actuator output member 40 which extends through a axial seal assembly 49 in an aperture 41 of the central wall 2 to abut the right hand side of diaphragm 10. The output member 40 is tubular to accommodate and enclose the head 42 of a wind-off bolt 43. The wind-off bolt which is normally in the position shown, is carried in a threaded member 46 captive in the right hand end wall of the cylinder and is provided with a keyed-on nut 47. A snap-on end cover 48 has an aperture 48a which affords access to the nut 47.

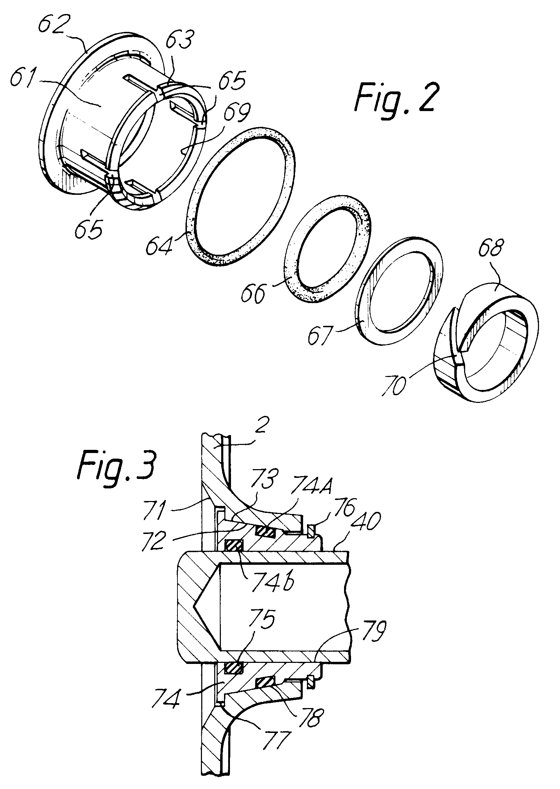

Referring now to the axial seal assembly 49, this is shown in a perspective view of its separate components in Fig. 2. A moulded nylon insert has a central frusto-conical part 61 joining end flanges 62 and 63. Flange 62 resides at the left hand side of the central wall 2 (Fig. 1) trapping an 'O'-ring 64. Assembly of the nylon insert into the wall 2 is permitted by the provision of slots 65 which allow the flange 63 to be sprung inwards. A further O-ring 66 which provides internal sealing with the output member 40 is then inserted followed by a flat anti extrusion ring 67. Lastly, a main molybdenum filled nylon bush member 68 is inserted. This is permitted by the provision of a skew-slot 70 enabling 68 to be compressed in diameter and pushed past the internal end flange 69 to snap into position to subsequently receive the output member 40. Once the member 40 is slidingly inserted the seal assembly is locked in by virtue of the four end flanges provided. Moreover the slot 70, being a skew-slot in the bush member 68, ensures that at no time is there an unbushed surface sector of the member 40.

Referring to the alternative axial sealing assembly 49 of Fig. 3, the centre wall of the middle casting 2 of the actuator is provided with an axial recess 71 and extending rightwards therefrom there is a frusto-conical surface part 72 which receives a bearing member 74 of molybdenum filled nylon which has a complimentary frusto-conical surface 73 and an external O-ring 74a. The bearing member 74 further has an inner bore 79 to slidingly receive the spring brake actuator output member 40 through an internal O-ring seal 74b carried by 74. In addition, the member 74 is provided with an external circlip 76 retaining it against rightward movement in the wall 2 (Fig 1) after assembly and a small flange 77 which limits the compression of the outer O-ring which completes the seal between the regions 3 and 4 of the actuator assembly. This seal assembly has the merit of being relatively simple as compared with the assembly of Fig. 2 whereas as in Fig. 2 the frusto-conical form still enables a raw casting 2 to be used without machining the inner surface 72.

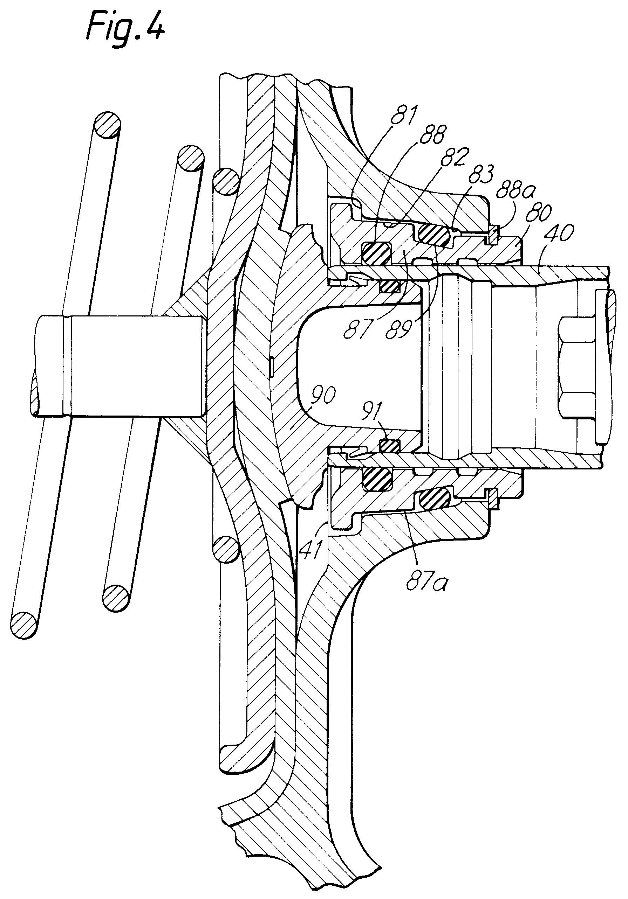

A preferred form of the axial sealing assembly 49 with O-rings 87 and 88 is shown in Fig. 4 on an enlarged scale. The aperture 41 of a centre wall of a middle casting, such as 2 of an actuator of Fig. 1, is formed with two frusto-conical parts 82 and 83 and again receives an inset 80 which is retained in position by a circlip 80a. The aperture 41 of wall 2 has a recess 81, a first frusto-conical part 82 of smaller diameter than the recess 81 and the second frusto-conical part 83, sealingly engages the O-ring seal 84a located by a groove of the insert 84. Preferably, the draw angle of the first frusto-conical part 82 is approximately 3^{o} to the rod axis and the draw angle of the second frusto-conical part 83 is approximately 10^{o} to the rod axis. These angles and further provision of slight draw angles within the end parts 85 and 86 of the aperture enable good quality cast interior finish to the aperture without any need to machine finish it. On assembly the region of the insert (80) indicated at reference 87 provides a close fit within the aperture of the housing to accept the inevitably occurring side loads transmitted via the actuator output rod 40. This and the provision of an insert 80 moulded of molybdenum filled nylon material with complementary frusto-conical external surfaces to respectively engage the surface 82 and locate the seal 89 provide a reliable and long-wearing seal assembly. In Fig. 4 the tube is sealingly closed at its inner end by a snap-in end-cap 90 having an O-ring seal 91.

The operation of the combined service brake actuator and spring brake actuator is conventional. During normal running of the vehicle to which the actuator is fitted the chamber 4 is maintained at above a predetermined pressure value via a respective input port and the piston 36 is thereby held in the position shown with the spring 38 fully compressed, The service diaphragm 10 also rests in a rearward position as shown the pressure being contained by the seal assembly 41. In the event of a service brake application being required a graduated pressure is applied to chamber 3 via the other respective input port and the diaphragm thereby drives the output rod 12 outwards to apply the brakes. Release occurs when the air is released. In the event of an emergency or secondary braking by the spring brake actuator, air pressure is released from chamber 4 usually by operation of a drivers' hand-control valve and after the pressure has fallen below the predetermined hold-off pressure the force of the spring is applied gradually or fully to the output rod 40. Rod 40 acts on the right hand side of the diaphragm 10 and results in a brake application via rod 12. This is releasable either by restoring the hold-off pressure in chamber 4 by manually operating the wind-off mechanism provided by bolt 43.

## Claims

1. A spring force actuator comprising a housing (1,33) within which a pressure responsive member (32,36) is axially movable under the influence of fluid pressure acting thereon in opposition to the force of a spring (38), to determine an output force applied via an output rod (40) which passes sealingly movably through an aperture (41) in a wall (2) of the housing characterised in that said output rod passes through a seal assembly (49) comprising an insert (61;74;80) having axial positioning means, said insert locating a first annular seal 89 between itself and a generally frusto-conical part (72) of said aperture and a second annular seal (88) between itself and the output rod (40).

2. A spring force actuator as claimed in claim 1 characterised in that said insert comprises a flange (62) axially trapping said first seal (64) against said wall and an internal bush member trapping said second seal within said insert, said insert being insertable in said aperture before insertion of said bush member.

3. A spring force actuator as claimed in claim 1, characterised in that said insert (74) has an external groove for said first seal (74a) and an internal annular groove for said second seal (74b) said insert also having a complementary external frusto-conical surface (73) engageable with said frusto-conical part (72) of said aperture (41).

4. A spring force actuator as claimed in claim 3 characterised in that said insert has a flange (77) which acts as an axial stop and limits the compression of the first seal (74a).

5. A spring force actuator as claimed in claim 4 said aperture has a first frusto-conical part (82) which receives a respective engaging part (87a) of said insert and a second frusto-conical part (83) which sealingly engages said first seal (87).

6. A spring force actuator as claimed in claim 5 characterised in that the draw angle of said first frusto-conical part (82) is a smaller angle to the rod (40) axis than the draw angle of said second frusto-conical part (83).

7. A spring force actuator as claimed in claim 6, characterised in that said smaller angle is approximately 3^{o} and the draw angle of said second frusto-conical part is approximately 10^{o} to the rod axis.

8. A spring force actuator as claimed in any preceding claim characterised in that said insert is moulded of molybdenum filled nylon.

9. A spring force actuator as claimed in any preceding claim characterised in that said insert is moulded of an acetal resin.

10. A spring brake actuator as claimed in any preceding claim.
